# EUROPEAN PATENT SPECIFICATION

(11) **EP 2 376 280 B1**
(45) Date of publication and mention of the grant of the patent: **21.06.2017**
(21) Application number: 09795533.0
(22) Date of filing: 21.12.2009
(51) Int. Cl.: B29C 70/30, B32B 25/10, B32B 5/26

(54) **IMPROVED COMPOSITE MATERIALS**
VERBESSERTE VERBUNDMATERIALIEN
MATÉRIAUX COMPOSITES AMÉLIORÉS

(30) Priority: 07.01.2009 GB 0900090
(43) Date of publication of application: 19.10.2011
(60) Divisional application: 16189316.9
(73) Proprietor: Hexcel Composites, Ltd., Duxford Cambridge CB2 4QB (GB)
(72) Inventor: CAWSE, John, Cambridgeshire (GB); HADLEY, Philip, Ely Cambridgeshire CB6 3WL (GB)
(74) Representative: Eddowes, Simon
(86) International application number: PCT/GB2009/051753
(87) International publication number: WO 2010/079319

(56) References cited:
- WO-A1-2004/009924
- WO-A1-2008/147754
- US-A1- 2008 277 057
- US-B1- 6 764 754

## Description

### Technical field

The invention relates to curable composite laminate vehicle body shell components having sound damping properties, a method for forming such composite laminates and the rigid cured laminates formed.

### Background

Composite materials have well-documented advantages over traditional construction materials, particularly in providing excellent mechanical properties at very low material densities. As a result, the use of such materials is becoming increasingly widespread and their application ranges from "industrial" and "sports and leisure" to high performance aerospace components.

Prepregs, comprising a fibre arrangement impregnated with resin such as epoxy resin, are widely used in the generation of such composite materials. Typically a number of plies of such prepregs are "laid-up" as desired and the resulting assembly, or laminate, is placed in a mould and cured, typically by exposure to elevated temperatures, to produce a cured composite laminate.

However, such composite materials, particularly thin, low density, high stiffness composites, have a tendency to resonantly vibrate in applications involving the passage of fluid, typically a gas, past their surface. Such vibration can reduce the service lifetime of the composites and also can generate a significant amount of noise, which is a particular issue in passenger aircraft applications.

In modem jet powered aircraft, the major contributing factor to noise within the passenger cabin during cruise is the turbulent boundary layer excitation of air passing the airframe at high speed. The pressure fluctuations on the surface initiate vibrations in the fuselage structures and these vibrations are transmitted into the cabin as broadband noise.

As the use of composite materials in the aircraft structure increases, the problem of noise generation becomes more acute. There are a number of ways of tackling this problem, however the most common involves damping the vibrations, involving conversion of the vibrational energy to heat.

A known method of damping composite materials is to apply a viscoelastic layer to the structure once formed, so that it deforms with the composite structure during vibration. The viscous properties of the viscoelastic layer dissipate the vibration by converting it to heat. A development of this technique involves placing a rigid layer, known as a constraining layer, on top of the viscoelastic layer. This has the effect that the viscoelastic layer deforms in shear, increasing its energy absorption capacity. There are commercially available so-called constrained layer damping products involving rubber and aluminium layers.

US 2006/0208135 involves attaching the constrained viscoelastic laminate to a structural member which is itself attached to the composite.

However, whilst the techniques of constrained layer damping are very effective at reducing noise they involve a large increase in the weight of the composite, typically involving a doubling of the weight when the underlying composite is only a few millimetres in thickness, as is quite common in passenger aircraft. Also, the applied layer must conform to the body structure, which may not be possible in highly curved or convex regions.

Attempts have been made to introduce damping layers as an internal part of the composite structure. US 5,487,928 discloses a fibre-reinforced laminate comprising alternating layers of structural layers interleaved with viscoelastic layers.

US 6,764,754 suggests a particular type of interleaving which involves creating a curable laminate with alternating stacks of multiple damping layers and multiple structural layers.

However, such structures tend to be very thick because of the large number of layers and the mechanical strength of the cured laminates is far less than it would be without the damping layers being present.

US 2008/0277057 discloses replacing part of the structural fuselage with a viscoelastic damping element surrounded by structural elements.

It would therefore seem that so-called passive approaches to noise damping must inevitably involve a significant weight increase, with constrained layer damping being the only practical solution for passenger aircraft.

More elaborate systems have been suggested, involving piezoelectric sensors which activate piezoelectric activators to cancel out the detected vibration. These can be effective in certain localised areas of an aircraft, however they are unsuitable for large area body coverage in view of their cost and associated supporting electronics and future maintenance issues.

There is therefore a need in the art for a more convenient method of introducing noise dampening, particularly for use over a large area, given the significant drawbacks involved in known approaches.

### Summary of invention

According to the invention there is provided a laminate and a method as defined in any one of the accompanying claims.

In a first aspect, the present invention relates to a curable laminate vehicle body shell component comprising thermosetting resin, at least three fibre-reinforced structural layers and at least one damping layer adjacent to two of the fibre-reinforced structural layers, wherein the ratio of the number of structural layers to damping layers is at least 3 : 1; and further wherein the at least one damping layer comprises uncured rubber and is free of fibre reinforcement, such that, when cured by exposure to an elevated temperature, the component becomes a rigid body shell.

It has been found that providing a body shell made of a curable laminate comprising a majority of structural layers with only a minority of damping layers provides a cured structure which can have noise damping properties as good as post-cure constrained layer damping techniques at only a fraction of the increased weight. Additionally, a wide range of body shell arrangements can be covered regardless of their curvature, as the laminate is uncured. Furthermore, known issues with impairment of mechanical integrity are minimised or eliminated by only having a minority of damping layers.

It is believed that the presence of adjacent structural layers effectively provides the constraining layer for the damping layer. The invention can therefore be viewed as providing a constrained layer damping solution integrated into a pre-cure laminate, carrying with it all of the above-mentioned advantages.

The damping layer(s), when the laminate is cured, may be characterised as a material having at least one, preferably at least two, more preferably all three of the following properties: a glass transition temperature (Tg) of from -100°C to 100°C, preferably from -80°C to 0°C; a tan δ peak in the range of from -60°C to 100°C, preferably from -30°C to 50°C; and a loss modulus peak (E") extending over a temperature range of at least 30°C, preferably over a range of at least 60°C.

In contrast, the structural layers, when the laminate is cured, may be characterised as a material having at least one, preferably at least two, more preferably all three or more of the following properties: a Tg of from 100°C to 300°C; a tan δ peak in the range of from 100°C to 400°C, preferably from 150°C to 300°C; and a loss modulus peak extending over a temperature range of less than 30°C.

The damping properties are effective with only very few damping layers, preserving the mechanical integrity of the laminate. Thus, the ratio of structural to damping layers is preferably from 3:1 to 50:1, more preferably from 5:1 to 20:1.

In another aspect, the invention relates to a curable laminate vehicle body shell component comprising thermosetting resin, at least one fibre-reinforced structural layer and at least one damping layer, wherein the ratio of the thickness of the structural layers to the damping layers is at least 3:1 and such that, when cured by exposure to an elevated temperature, the component becomes a rigid body shell.

In this aspect, the ratio of thickness of structural layers to damping layers is preferably from 3:1 to 50:1, preferably from 5:1 to 20:1.

Although applicable to a wide variety of situations, the invention is particularly suited where the laminate is relatively thin, as such composites are prone to vibration and are relatively lightweight. Thus, preferably at least 50% of the structural layers have a thickness of from 0.1 to 1.0 mm, preferably from 0.15 to 0.5 mm. Ideally at least 80%, or even substantially all the structural layers have this thickness.

The laminate also therefore preferably has a thickness of from 1.0 to 10.0 mm, preferably from 1.0 to 5.0 mm and more preferably from 1.5 to 3.0 mm.

The laminate may comprise thermoset resin in a variety of types and forms. For example, resin may be present as discrete layers between fibre layers. Typically however, resin is prepregged into the structure of the fibre layers, although some fibre layers could potentially be left "dry" as desired in a so-called semipreg arrangement. Resin may be present in patterns or as layers, the choice of design being at the discretion of the person skilled in the art.

The curable thermoset resin of the structural layer may be selected from those conventionally known in the art, such as resins of phenol formaldehyde, urea-formaldehyde, 1, 3, 5-triazine-2, 4, 6-triamine (Melamine), bismaleimide, epoxy resins, vinyl ester resins, benzoxazine resins, polyesters, unsaturated polyesters, cyanate ester resins, or mixtures thereof. Epoxy resins are particularly preferred. Curing agents and optionally accelerators may be included as desired.

The fibres of the structural layers may take a wide variety of forms and be made from a wide range of suitable materials. The fibres may be unidirectional or woven in a multi-directional arrangement, or non-woven, as desired according to the requirements of the intended application. A preferred arrangement is to use unidirectional fibres and arrange the structural layers so that they alternate their fibre direction, to form a quasi isotropic assembly. Other ply stacking arrangements can be adopted depending on the specific application of the component.

The fibres may be made from carbon fibre, glass fibre or organic fibres such as aramid.

The damping layer typically comprises a further thermosetting material and may take any of a variety of suitable forms, provided it has the physical properties sufficient to cause damping. The damping layer is uncured. In a preferred embodiment the damping layer comprises a rubber, particularly those based on the monomer units butyl, chlorobutyl, isoprene, chloroprene, butadiene, styrene and acrylonitrite. Nitrile rubbers are a preferred rubber. Additionally, the damping layer may comprise a curable resin material which can be the same or similar to that used in the structural layers, as described above. Typically the resin will need additives in order for it to perform as a damping layer.

The damping layer may comprise a wide variety of additives, including fillers, other polymers, plasticisers, flexibilisers, extenders, softeners and tackifiers. Examples of fillers includes carbon black, mica, graphite and chalk. Fillers with a layered structure such as mica are beneficial because they enhance the damping properties of the layer.

Damping layers are free of fibre reinforcement.

As the presence of damping layers is believed to be detrimental to the mechanical properties of the laminate, if there are multiple damping layers present then these are preferably not in contact with each other. Thus it is preferred that the laminate comprises no more than four damping layers adjacent to each other, preferably no more than three, more preferably no more than two and most preferably no damping layers are adjacent to each other.

Additionally the laminate preferably has no more than five damping layers in total, preferably no more than four, more preferably no more than three, most preferably no more than two. In a preferred embodiment the laminate contains a single damping layer.

As the laminate according to the invention avoids the introduction of unnecessary weight, the laminate may extend over a substantial area of the vehicle body. Thus, the curable laminate preferably has a surface area of at least 1.0 m², more preferably at least 2.0 m², most preferably at least 5.0 m².

Additionally, the laminate is ideally suited for use as an aircraft body shell component, in view of this lightweight nature.

The laminate of the present invention may be manufactured by any suitable method known in the art for laying laminate structures. However, preferably the method involves the laying down of a prepreg or semipreg having a damping layer intimately bonded thereto. In this way the curable laminate can be placed in contact with a mould.

Thus, in a second aspect, the invention relates to a method of constructing a laminate vehicle body shell component, comprising laying down a sheet-like prepreg or semipreg layer comprising thermosetting resin and structural fibres, having intimately contacted thereto a damping layer, wherein the damping layer comprises uncured rubber and is free of fibre reinforcement, and forming the damping prepreg or semipreg into the eventual shape of the body shell component; either before or after, laying down additional fibre structural layers to form a curable laminate vehicle body shell component, so that the ratio of the number of structural layers to damping layers is at least 3:1, and further so that the damping layer is adjacent to two of the structural layers, then exposing the laminate to elevated temperature and optionally elevated pressure, thereby to cure the laminate to produce the laminate vehicle body shell component.

Preferably the additional fibre structural layers are laid down after the damping prepreg or semipreg.

The laminate produced according to the method of the invention can have any of the physical, structural or chemical properties as described above for the curable laminate vehicle body shell.

The laminate or curable prepreg or semipreg may be cured by exposure to elevated temperature and optionally elevated pressure by means of any suitable known method, such as vacuum bag, autoclave or press cure to produce a rigid body shell.

The invention will now be illustrated, by way of example, with reference to the following figures, in which:-
Figure 1 is a schematic representation, in exploded form, of a pre-cured laminate according to the invention.
Figure 2 is a schematic representation of a cured laminate according to the invention.
Figure 3 is a schematic representation of a damping prepreg according to the invention.

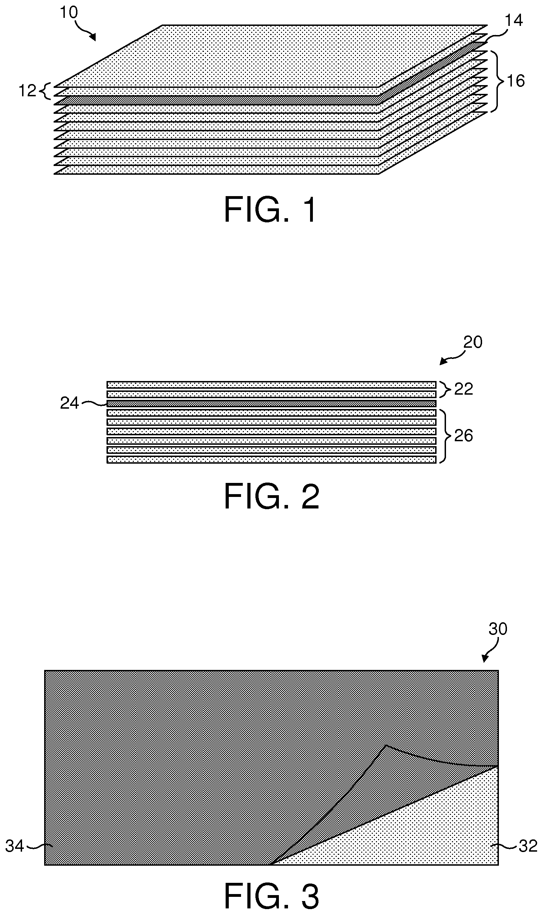

Referring to the figures, Figure 1 shows a laminate 10 comprising two upper structural layers 12, a damping layer 14, and eight lower structural layers 16.

The structural layers 12, 16 comprise unidirectional carbon fibre reinforcement layers prepregged with a curable epoxy resin. The alignment of the fibres is alternated to provide a 0°/90° lay-up. Each structural layer has a thickness of 0.2 mm.

The damping layer 14 comprises a curable and uncured nitrile rubber impregnated into a carbon fibre woven sheet, and has a thickness of 0.4 mm.

The laminate 10 therefore has a thickness of 2.4 mm.

Figure 2 shows a cured laminate 20 comprising two upper structural layers 22, a damping layer 24 and six structural layers 26. The laminate 20 forms a component of a vehicle body shell and provides sound damping properties as well as suitable material properties.

Figure 3 shows damping prepreg 30 comprising a sheet of prepreg 32 having intimately contacted thereto a damping layer 34. The prepreg 32 comprises unidirectional carbon fibre reinforcement prepregged with epoxy resin. The direction of the fibres can be seen in Figure 3, which for illustration purposes only, shows the damping layer 34 peeled back from prepreg 32.

The damping prepreg may be supplied on a roll and deployed in known manner to form a vehicle body shell or other component. Typically further structural layers will be layed down, e.g. additional prepreg or semipreg layers, to produce a suitably strong laminate when cured.

### Example 1

An uncured nitrile rubber compound (E10956NBR Black, Berwin, UK) was pressed at room temperature in a hydraulic press to give a sheet with an areal weight approximately 310 g/m². This rubber layer was then applied to a ply of a unidirectional aerospace grade prepreg M21E/34%/268/IMA (Hexcel, UK) and assembled into an eight ply UD laminate with the rubber layer between plies two and three of the assembly. The prepreg stack was cured into a laminate using the prepreg manufacturer's recommended cure cycle - a vacuum bag, autoclave cure with an ultimate cure time of 2 h at 180°C. The laminate formed appeared to have good dimensional stability. It was cut to form a test specimen measuring 120 mm × 42.5 mm. The test specimen was suspended from two adjacent corners by applying bulldog clips. Cotton string was attached to the clips and the specimen was then suspended in a test chamber. A miniature accelerometer (Model 352C22, PCB Piezoelectronics) was affixed firmly to the centre of the rear of the panel and this was connected via an analogue to digital converter to a PC running the signal analysis software (SignalCalc Ace™ by Data Physics).

An instrumented hammer (Model 086C01, PCB Piezoelectronics), again connected to the PC was used to strike the front of the panel directly in the centre. The test was carried out at room temperature. The initial excitation of the panel and its continuing resonance were recorded for analysis.

A frequency domain plot was generated via a Fast Fourier Transformation of the time domain signal from the accelerometer located on the test piece. The first major resonant mode of the panel was determined from this frequency response function. The first major resonant mode of this panel was found at about 1300 Hz. Although subsequent damping treatments changed the precise frequency of this resonance, it was easy to identify for analysis each time.

The dynamic signal analysis software was used to report the damping of the laminate at this frequency. This was calculated using the bandwidth (half power) method. Each test was repeated three times and the signal averaged. Results were compared to a control laminate with no damping layer element.

**Table 1**

| | **Control** | **Invention** | **Smacsonic™** |
|---|---|---|---|
| **Weight (kg/m²)** | 3.28 | 4.00 | 6.43 |
| **Damping value** | 0.89% | 4.90% | 4.25% |
| **Thickness (mm)** | 2.09 | 2.40 | 3.85 |

Results were also compared to a commercially available damping treatment, Smacsonic™ from Smac (Toulon, France). A test specimen was produced by covering a similar sized test specimen to that above with the aluminium backed Smacsonic® constrained layer damping element.

The damping values at ∼ 1300 Hz, together with weight and thickness data are shown in Table 1. It can be seen that the laminate according to the invention provides an excellent damping response for only a small increase in weight and thickness.

### Example 2, not according to the invention

A solution/dispersion of an uncured rubber compound (E10956NBR Black, Berwin, UK) was produced in methyl ethyl ketone at a solids concentration of approximately 7.5%. A damping layer according to the invention was produced by impregnating a 20 g/m² random carbon veil (Optimat 203 from Technical Fibre Products) with this solution/dispersion to yield a supported, uncured elastomeric element with areal weight of approximately 190 g/m². This structure was layered onto and intimately contacted with a prepreg as used in Example 1 and was included within a laminate structure of such prepregs as in Example 1, which was then cured and tested as previously described.

This laminate had a thickness and areal weight of 2.29 mm and 3.47 kg/m² respectively and gave a damping value of 2.64% art ∼1300 Hz. As can be seen by comparing to the results above, this represents a 210% improvement in damping over the control laminate with no significant change in weight or thickness.

### Example 3, not according to the invention

A solution/dispersion of an uncured rubber compound (E10956NBR Black, Berwin, UK) was produced in MEK at a concentration of approximately 7.5%. A constrained layer damping element was produced by impregnating a 4 g/m² polyester veil (T2570/01 from Technical Fibre Products, UK) with this solution/dispersion to yield a supported uncured elastomeric element with areal weight of approximately 50 g/m². Light pressure and moderate temperature were used to intimately affix this lightweight supported damping layer to a ply of M21E UD carbon prepreg (Hexcel, UK). This wholly integral structure was included in a laminate structure and cured & tested as described above. The cured laminate had a thickness of 2.21 mm and a weight of 3.33 kg/m² and gave a damping value of 1.39%) at ∼ 1300 Hz. Being intimately associated with the uncured prepreg, this example should be particularly amenable to processing using currently available technologies such as Automatic Tape Laying (ATL).

## Claims

1. A curable laminate vehicle body shell component comprising thermosetting resin, at least three fibre-reinforced structural layers and at least one damping layer adjacent to two of the fibre-reinforced structural layers, wherein the ratio of the number of structural layers to damping layers is at least 3:1, and further wherein the at least one damping layer comprises uncured rubber and is free of fibre reinforcement, and such that, when cured by exposure to an elevated temperature, the component becomes a rigid body shell.

2. A curable laminate according to claim 1, wherein the ratio of structural to damping layers is from 3:1 to 50:1, preferably from 5:1 to 20:1.

3. A curable laminate according to claim 1 or claim 2, wherein at least 50%, preferably at least 80% or even substantially all, of the structural layers have a thickness of from 0.1 to 1.0 mm, preferably from 0.15 to 0.5 mm.

4. A curable laminate according to any one of the preceding claims which has a thickness of from 1.0 to 10.0 mm, preferably from 1.0 to 5.0 mm, more preferably from 1.5 to 3.0 mm.

5. A curable laminate according to any one of the preceding claims, wherein the laminate comprises no more than four damping layers adjacent to each other.

6. A curable laminate according to any one of the preceding claims, which has no more than five damping layers in total.

7. A curable laminate according to any one of the preceding claims, wherein the vehicle is an aircraft.

8. A curable laminate according to any one of the preceding claims which is in contact with a mould.

9. A curable laminate according to any one of the preceding claims, which has a surface area of at least 1.0 m², preferably at least 2.0 m², preferably at least 5.0 m².

10. A rigid body shell obtainable by the process of curing a curable laminate according to any one of the preceding claims by exposing it to elevated temperature and optionally elevated pressure.

11. A method of constructing a laminate vehicle body shell component, comprising laying down a sheet-like prepreg or semipreg layer comprising thermosetting resin and structural fibres, having intimately contacted thereto a damping layer, wherein the damping layer comprises uncured rubber and is free of fibre reinforcement, and forming the damping prepreg or semipreg into the eventual shape of the body shell component; either before or after, laying down additional fibre structural layers to form a curable laminate vehicle body shell component, so that the ratio of the number of structural layers to damping layers is at least 3:1, and further so that the damping layer is adjacent to two of the structural layers; and then exposing the laminate to elevated temperature and optionally elevated pressure, thereby to cure the laminate to produce the laminate vehicle body shell component.

12. A method according to claim 11, wherein the additional fibre structural layers are laid down after the damping prepreg or semipreg.

## Patentansprüche

1. Aus einem aushärtbaren Laminat bestehendes Rohkarosseriebauteil für ein Fahrzeug, umfassend in Wärme aushärtendes Harz, wenigstens drei faserverstärkte Strukturschichten und wenigstens eine an zwei der faserverstärkten Strukturschichten angrenzende Dämpfungsschicht, wobei das Verhältnis der Anzahl der Strukturschichten zu der Anzahl der Dämpfungsschichten wenigstens 3:1 beträgt und wobei ferner die wenigstens eine Dämpfungsschicht unvulkanisierten Gummi umfasst und frei von Faserverstärkung ist, und zwar derart, dass das Bauteil zu einer starren Rohkarosserie wird, wenn es ausgehärtet wird, indem es einer erhöhten Temperatur ausgesetzt wird.

2. Aushärtbares Laminat nach Anspruch 1, wobei das Verhältnis der Strukturschichten zu den Dämpfungsschichten im Bereich von 3:1 bis 50:1, vorzugsweise von 5:1 bis 20:1 liegt.

3. Aushärtbares Laminat nach Anspruch 1 oder Anspruch 2, wobei wenigstens 50%, vorzugsweise wenigstens 80% oder im Wesentlichen sogar alle der Strukturschichten eine Dicke im Bereich von 0,1 bis 1,0 mm, vorzugsweise von 0,15 bis 0,5 mm aufweisen.

4. Aushärtbares Laminat nach einem der vorhergehenden Ansprüche, das eine Dicke im Bereich von 1,0 bis 10,0 mm, vorzugsweise von 1,0 bis 5,0 mm, besonders bevorzugt von 1,5 bis 3,0 mm aufweist.

5. Aushärtbares Laminat nach einem der vorhergehenden Ansprüche, wobei das Laminat nicht mehr als vier angrenzend aneinander liegende Dämpfungsschichten umfasst.

6. Aushärtbares Laminat nach einem der vorhergehenden Ansprüche, das insgesamt nicht mehr als fünf Dämpfungsschichten aufweist.

7. Aushärtbares Laminat nach einem der vorhergehenden Ansprüche, wobei es sich bei dem Fahrzeug um ein Flugzeug handelt.

8. Aushärtbares Laminat nach einem der vorhergehenden Ansprüche, das in Kontakt mit einer Form steht.

9. Aushärtbares Laminat nach einem der vorhergehenden Ansprüche, das einen Oberflächenbereich von wenigstens 1,0 m², vorzugsweise von wenigstens 2,0 m², besonders bevorzugt von wenigstens 5,0 m² aufweist.

10. Starre Rohkarosserie, die durch den Prozess des Aushärtens eines aushärtbaren Laminats nach einem der vorhergehenden Ansprüche erhalten wird, indem es einer erhöhten Temperatur und optional einem erhöhten Druck ausgesetzt wird.

11. Verfahren zum Erstellen eines aus einem Laminat bestehenden Rohkarosseriebauteils für ein Fahrzeug, umfassend das Festlegen einer plattenförmigen Prepreg- oder Semipreg-Schicht, die in Wärme aushärtendes Harz und Strukturfasern umfasst und eine in engem Kontakt dazu stehende Dämpfungsschicht aufweist, wobei die Dämpfungsschicht unvulkanisierten Gummi umfasst und frei von Faserverstärkung ist, sowie das Umformen der Prepreg- oder Semipreg-Dämpfungsschicht in die letztendliche Form des Rohkarosseriebauteils, das davor oder danach erfolgende Festlegen zusätzlicher aus Fasern bestehender Strukturschichten, um ein aus einem aushärtbaren Laminat bestehendes Rohkarosseriebauteil zu bilden, so dass das Verhältnis der Anzahl der Strukturschichten zu der Anzahl der Dämpfungsschichten wenigstens 3:1 beträgt und ferner die Dämpfungsschicht angrenzend an zwei der Strukturschichten liegt, und anschließendes Aussetzen des Laminats einer erhöhten Temperatur und optional einem erhöhten Druck, wodurch das Laminat ausgehärtet wird, um das aus dem Laminat bestehende Rohkarosseriebauteil für ein Fahrzeug zu produzieren.

12. Verfahren nach Anspruch 11, wobei die zusätzlichen aus Fasern bestehenden Strukturschichten nach der Prepreg- oder Semipreg-Dämpfungsschicht festgelegt werden.

## Revendications

1. Élément constitutif de coque de véhicule sous forme de stratifié durcissable comprenant une résine thermodurcissable, au moins trois couches structurales renforcées par des fibres et au moins une couche d'amortissement adjacente à deux des couches structurales renforcées par des fibres, dans lequel le rapport du nombre de couches structurales contre le nombre de couches d'amortissement est d'au moins 3:1, et en outre dans lequel ladite au moins une couche d'amortissement comprend du caoutchouc non durci et est exempte de renforcement par des fibres, et tel que, une fois durci par exposition à une température élevée, l'élément constitutif devienne une coque rigide.

2. Stratifié durcissable selon la revendication 1, dans lequel le rapport des couches structurales contre les couches d'amortissement est de 3:1 à 50:1, préférablement de 5:1 à 20:1.

3. Stratifié durcissable selon la revendication 1 ou la revendication 2, dans lequel au moins 50 %, préférablement au moins 80 % ou même la quasi-totalité des couches structurales ont une épaisseur de 0,1 à 1,0 mm, préférablement de 0,15 à 0,5 mm.

4. Stratifié durcissable selon l'une quelconque des revendications précédentes, lequel a une épaisseur de 1,0 à 10,0 mm, préférablement de 1,0 à 5,0 mm, plus préférablement de 1,5 à 3,0 mm.

5. Stratifié durcissable selon l'une quelconque des revendications précédentes, le stratifié ne comprenant pas plus de quatre couches d'amortissement adjacentes les unes aux autres.

6. Stratifié durcissable selon l'une quelconque des revendications précédentes, lequel ne comprend pas plus de cinq couches d'amortissement au total.

7. Stratifié durcissable selon l'une quelconque des revendications précédentes, le véhicule étant un avion.

8. Stratifié durcissable selon l'une quelconque des revendications précédentes, lequel est en contact avec un moule.

9. Stratifié durcissable selon l'une quelconque des revendications précédentes, lequel a une aire de surface d'au moins 1,0 m², préférablement d'au moins 2,0 m², préférablement d'au moins 5,0 m².

10. Coque rigide pouvant être obtenue par le procédé de durcissement d'un stratifié durcissable selon l'une quelconque des revendications précédentes en l'exposant à une température élevée et optionnellement à une pression élevée.

11. Procédé de construction d'un élément constitutif de coque de véhicule sous forme de stratifié, comprenant la pose d'une couche de matériau préimprégné ou de matériau semi-imprégné semblable à une feuille comprenant une résine thermodurcissable et des fibres structurales, la mise d'une couche d'amortissement en contact intime avec ladite couche de matériau préimprégné ou semi-imprégné, la couche d'amortissement comprenant un caoutchouc non durci et étant exempte de renforcement par des fibres, et la formation du matériau préimprégné ou semi-imprégné d'amortissement pour lui donner la forme finale de l'élément constitutif de coque, soit avant, soit après, la pose de couches structurales de fibres additionnelles, pour former un élément constitutif de coque de véhicule sous forme de stratifié durcissable, de telle sorte que le rapport du nombre de couches structurales contre le nombre de couches d'amortissement soit d'au moins 3:1, et en outre de telle sorte que la couche d'amortissement soit adjacente à deux des couches structurales ; puis l'exposition du stratifié à une température élevée et optionnellement à une pression élevée, afin de durcir ainsi le stratifié pour produire l'élément constitutif de coque de véhicule sous forme de stratifié.

12. Procédé selon la revendication 11, dans lequel les couches structurales de fibres additionnelles sont posées après le matériau préimprégné ou semi-imprégné d'amortissement.
